Europäisches Patentamt

European Patent Office

Office européen des brevets

(11) Numéro de publication: **0 275 733 B1**

(19)

(12) **FASCICULE DE BREVET EUROPEEN**

(45) Date de publication de fascicule du brevet:
25.09.91

(51) Int. Cl.⁵: **C01F 17/00**

(21) Numéro de dépôt: **87402794.9**

(22) Date de dépôt: **09.12.87**

(54) **Oxyde cérique à nouvelles caractéristiques morphologiques et son procédé d'obtention.**

(30) Priorité: **19.12.86 FR 8617805**

(43) Date de publication de la demande:
**27.07.88 Bulletin 88/30**

(45) Mention de la délivrance du brevet:
**25.09.91 Bulletin 91/39**

(84) Etats contractants désignés:
**AT BE CH DE ES FR GB GR IT LI LU NL SE**

(56) Documents cités:
**EP-A- 0 153 227**     **WO-A-79/00248**
**FR-A- 1 232 937**     **FR-A- 1 442 597**
**FR-A- 2 583 737**     **LU-A- 38 182**

(73) Titulaire: **RHONE-POULENC CHIMIE**
**25, quai Paul Doumer**
**F-92408 Courbevoie Cédex(FR)**

(72) Inventeur: **David, Claire**
**14bis, rue Friant**
**F-75014 Paris(FR)**
Inventeur: **Magnier, Claude**
**3, rue des Chaufourniers**
**F-75019 Paris(FR)**
Inventeur: **Latourrette,Bertrand**
**2, allée des Erables, Wattwiller**
**F-68700 Cernay(FR)**

(74) Mandataire: **Dutruc-Rosset, Marie-Claude et al**
**RHONE-POULENC INTERSERVICES Service**
**Brevets Chimie 25, Quai Paul Doumer**
**F-92408 Courbevoie Cédex(FR)**

## Description

La présente invention a pour objet un oxyde cérique à nouvelles caractéristiques morphologiques. L'invention vise également la procédé d'obtention dudit oxyde.

Dans l'expose qui suit de l'invention, on entend par surface spécifique, la surface spécifique B.E.T. déterminée selon la méthode BRUNAUER - EMMETT - TELLER, décrite dans le périodique "The Journal of American Society 1938, 60, 309".

L'oxyde cérique seul ou en mélange avec d'autres oxydes métalliques est utilisé comme catalyseur pour la synthèse notamment du méthanol [C.R. Séances Acad. Sci. Ser. 2. 292 (12), 883-5 (1981)] ou dans des procédés de traitement des gaz résiduaires (demande de brevet japonaise n° 76/62 616).

Pour avoir une bonne réactivité catalytique, il est souhaitable de disposer d'un oxyde cérique ayant la plus grande surface spécifique possible.

On a proposé selon FR-A 2 559 754 un oxyde cérique présentant une surface spécifique d'au moins 85 ± 5 m²/g obtenue après calcination entre 350 et 450° C et de préférence située entre 100 et 130 m²/g après calcination entre 400 et 450° C. Ledit oxyde est préparé par hydrolyse d'une solution aqueuse de nitrate cérique en milieu acide nitrique, puis séparation du précipité obtenu, lavage, éventuellement séchage, puis calcination entre 300 et 600° C. L'oxyde cérique obtenu présente une grande surface spécifique mais une porosité faible puisque les micropores ont un diamètre moyen variant de 10 à 20 Å et un volume poreux de l'ordre de 0,02 cm³/g.

On connaît également dans l'art antérieur (FR-A 2 559 755) un oxyde cérique présentant une surface spécifique d'au moins 85 ± 5 m²/g après calcination entre 350 et 500° C et de préférence située entre 150 et 180 m²/g après calcination entre 400 et 450° C. Cet oxyde est obtenu selon un procédé qui consiste à précipiter un sulfate basique cérique en faisant réagir une solution aqueuse de nitrate cérique et une solution aqueuse contenant des ions sulfate, à séparer le précipité obtenu, à le laver, éventuellement à le sécher puis à le calciner à une température variant entre 300 et 500° C. L'oxyde cérique ainsi préparé présente une grande surface spécifique et une porosité étalée avec des pores allant de 10 à 200 Å et un volume poreux d'environ 0,15 cm³/g. Par ailleurs, il renferme une quantité d'ions sulfate résiduelle qui fait qu'il ne peut être utilisé que sélectivement dans le domaine de la catalyse.

Par rapport aux produits décrits dans la littérature, la demanderesse propose un oxyde cérique à grande surface spécifique possédant des caractéristiques nouvelles de porosité et présentant une bonne stabilité thermique.

La présente invention concerne un oxyde cérique ayant une surface spécifique d'au moins 100 m²/g après calcination entre 350 et 450° C caractérisé par le fait qu'il présente un volume poreux d'au moins 0,3 cm³/g et des pores d'un diamètre moyen supérieur à 50 Å.

Dans la présente demande, les surfaces spécifiques exprimées sont mesurées sur un produit ayant subi une calcination d'au moins 2 heures à la température donnée.

Le volume poreux et la taille des pores sont déterminés comme la surface spécifique par la méthode BET.

Un première caractéristique de l'oxyde cérique selon l'invention est qu'il présente une grande surface spécifique.

L'oxyde cérique préféré selon l'invention présente une surface spécifique de 100 à 160 m²/g, et, encore plus préférentiellement, de 140 à 160 m²/g après calcination à une température comprise entre 400 et 450° C.

Une autre caractéristique de l'oxyde cérique selon l'invention est qu'il présente une surface spécifique relativement stable dans une gamme de température allant de 400 à 600° C.

C'est ainsi que l'oxyde cérique préféré présente encore une surface spécifique de 80 à 130 m²/g après calcination à 600° C. Plus préférentiellement, l'oxyde cérique présente une surface spécifique supérieure à 100 m²/g, de préférence comprise entre 100 et 130 m²/g, après calcination à 600° C.

Une autre caractéristique de l'oxyde cérique de l'invention est qu'il présente une forte porosité.

Le volume poreux de l'oxyde cérique selon l'invention peut varier entre 0,3 et 0,45 cm³/g.

La taille des pores s'échelonne entre 20 et 1000 Å. Le diamètre moyen ($d_{50}$) des pores varie entre 50 et 200 Å.

On définit le diamètre moyen comme étant un diamètre tel que tous les pores inférieurs à ce diamètre constituent 50 % du volume poreux ($v_p$) total.

L'examen par microscopie électronique à balayage montre que l'oxyde cérique est constitué de grains très fins de l'ordre de 1$\mu$m à 5 $\mu$m avec présence de gros agglomérats de l'ordre de 20 à 50$\mu$m.

L'examen par microscopie électronique par transmission met en évidence des cristaux de forme aciculaire.

Les dimensions des aiguilles varient entre 100 et 1000 Å et sont le plus souvent voisines de 500 Å.

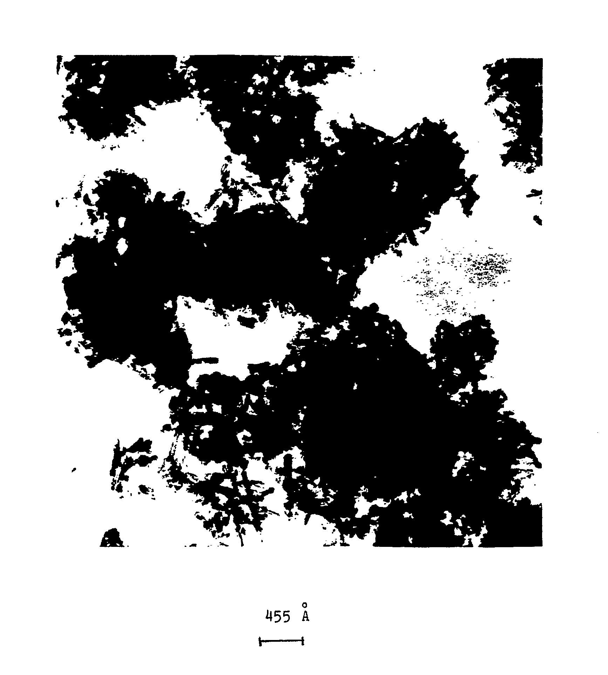

La figure 1 représente une photographie prise au microscope électronique par transmission (grossissement G = 220 000) qui révèle la morphologie de l'oxyde cérique sous forme d'aiguilles :ledit oxyde ayant subi une calcination à 600° C.

L'analyse par diffraction X montre que l'oxyde cérique de l'invention présente une phase cristalline de type $CeO_2$ ayant un paramètre de maille variant de 5,42 à 5,44 Å et un taux de cristallisation compris entre 50 et 80 %. Dans la partie cristallisée, la taille des cristallites d'un oxyde cérique obtenu après calcination à 400° C, varie entre 40 et 100 Å.

Conformément à l'invention, on obtient un oxyde cérique contenant une quantité résiduelle d'un cation alcalin correspondant au cation de la base mise en oeuvre au cours de la préparation de l'oxyde cérique de l'invention. La teneur résiduelle du cation alcalin représente généralement au plus 0,2 % exprimé en % poids de cation métallique par rapport à l'oxyde cérique.

Le procédé d'obtention de l'oxyde cérique de l'invention est caractérisé par le fait qu'il consiste à préparer un hydroxyde vrai de cérium par réaction d'un sel de cérium et d'une base forte en présence d'ions carboxylate, ou par réaction d'un carboxylate de cérium et d'une base forte, à séparer le précipité obtenu, à le laver, et à le traiter thermiquement.

Par l'expression, hydroxyde vrai de cérium, on entend l'hydroxyde céreux Ce (OH)$_3$ ou l'hydroxyde cérique Ce(OH)$_4$ que l'on peut également écrire sous la forme $CeO_2$, 2 $H_2O$.

Dans la première étape du procédé de l'invention, on effectue la préparation de l'hydroxyde vrai de cérium.

Une première variante d'exécution de l'invention consiste à le précipiter en faisant réagir un sel de cérium et une base en présence d'ions carboxylate qui peuvent être apportés sous forme acide ou sous la forme d'un sel de métal alcalin ou d'ammonium.

Pour simplifier l'exposé, on désigne par acide carboxylique, toutes les sources d'ions carboxylate qu'ils soient sous forme acide ou salifiée.

On effectue le mélange du sel de cérium et de l'acide carboxylique que l'on fait réagir ensuite avec un base.

Le sel de cérium mis en oeuvre selon le procédé de l'invention peut être tout sel de cérium à l'état céreux ou cérique soluble dans les conditions de l'invention.
On peut également utiliser un mélange de sels de cérium à l'état céreux ou cérique.

Comme exemples de sels de cérium susceptibles d'être employés on peut citer le nitrate céreux, le chlorure céreux sous forme solide ou sous forme de solution aqueuse.

·On peut également mettre en jeu, une solution aqueuse de de nitrate céri-ammoniacal ou de nitrate cérique.
On peut faire appel à une solution de nitrate cérique obtenue par action de l'acide nitrique sur un oxyde cérique hydraté préparé d'une manière classique par réaction d'une solution d'un sel céreux par exemple, le carbonate céreux et d'une solution d'ammoniaque en présence d'eau oxygénée.

La solution de nitrate cérique obtenue selon le procédé d'oxydation électrolytique d'une soltion de nitrate céreux et que est décrite dans FR-A 2 570 087 constitue une matière première de choix.

La solution de sel de cérium est choisie de telle sorte qu'elle ne contienne pas d'impuretés qui puissent se retrouver, dans le produit final. Il peut être avantageux de mettre en jeu une solution d'un sel de cérium présentant un degré de pureté supérieure à 99 %.

La concentration de la solution de sel de cérium n'est pas un facteur critique, selon l'invention et elle peut varier dans de larges limites ; une concentration comprise entre 0,1 et 3 moles par litre est préférée.

Comme source d'ions carboxylate, on peut faire appel à tout acide carboxylique soluble dans les conditions de l'invention et notamment aux acides carboxyliques aliphatiques, cycloaliphatiques, aromatiques et leurs mélanges. D'une manière préférentielle, on utilise les acides carboxyliques aliphatiques linéaires ou ramifiés ayant de 1 à 10 atomes de carbone.

A titre d'acides carboxyliques convenant à l'invention, on peut citer l'acide formique, l'acide acétique, l'acide propionique, l'acide benzoique. On utilise, de préférence, l'acide acétique.

La proportion de l'acide carboxylique à utiliser par rapport au sel de cérium n'est pas critique. La rapport molaire entre l'acide mis en jeu et le sel de cérium exprimé en $CeO_2$ peut varier entre 1 et 10 et est choisi de préférence entre 2 et 5.

Selon le procédé de l'invention, on fait réagir le mélange de la solution aqueuse de sel de cérium et de l'acide carboxylique avec une base.

La base mise en oeuvre selon l'invention est une ·solution aqueuse d'une base forte telle que, par exemple, la soude ou la potasse. On choisit, préférentiellement, une solution aqueuse de soude.

La normalité de la solution basique mise en oeuvre n'est pas un facteur critique selon l'invention, elle peut varier dans de larges limites, par exemple, entre 0,1 et 11 N mais il est préférable de faire appel à des solutions dont la concentration varie entre 2 et 10 N.

La proportion entre la base et le sel de cérium est telle que le rapport molaire OH /Ce exprimé en $CeO_2$ est supérieur ou égal à 3,0 et inférieur ou égal à 10 : OH représente le nombre de moles OH apportées par la base et Ce represente le nombre de moles de Ce$^{III}$ et/ou Ce$^{IV}$ présents dans le milieu réactionnel. Les bornes définies ne sont pas critiques mais elles sont choisies préférentiellement pour des raisons économiques.

On choisit une concentration finale du milieu réactionnel en cérium exprimé en $CeO_2$ comprise entre 0,2 et 1 mole/litre et de préférence aux environs de 0,5 mole/litre.

Le mélange de différents réactifs mis en oeuvre dans les quantités définies précédemment est effectué à une température qui peut se situer entre la température ambiante et la température de reflux du mélange réactionnel de préférence entre 80° C et la température de reflux du mélange réactionnel.

La durée de la réaction n'est pas critique. Elle peut varier entre 1 heure et 8 heures, de préférence entre 2 et 5 heures.

On peut réaliser le mélange des réactifs précités selon plusieurs variantes. Par exemple, on peut faire le mélange simultané, sous agitation, du mélange de la solution aqueuse du sel de cérium et de l'acide carboxylique avec la solution basique ou bien additionner, en continu ou en une seule fois, la base dans ledit mélange ou inversement.

Une autre variante d'exécution de l'invention consiste à précipiter un hydroxyde de cérium vrai en faisant réagir un carboxylate de cérium III ou IV avec une base.

A titre de carboxylates de cérium, on peut faire appel à tout carboxylate de cérium soluble dans les conditions de l'invention et plus particulièrement à ceux qui dérivent d'un acide carboxylique choisi parmi les acides carboxyliques aliphatiques, cycloaliphatiques, aromatiques et leurs mélanges. On utilise de préférence les acides carboxyliques aliphatiques linéaires ou ramifiés ayant entre 2 et environ 18 atomes de carbone.

Comme exemples de carboxylates de cérium III, on peut nommer l'acétate, l'éthyl-2 hexanoate, le néo-décanoate, le stéarate céreux.

Les carboxylates de cérium étant généralement sous forme solide, on les ajoute préférentiellement dans la solution aqueuse de base.

Les proportions des réactifs et les conditions de mise en oeuvre du procédé restent identiques à ce qui est décrit précédemment.

Selon une variante préférée de l'invention dans le cas où l'on effectue la précipitation de l'hydroxyde de cérium à l'état céreux quelle que soit la variante d'exécution de l'invention, il est préférable de l'oxyder à l'état cérique en ajoutant en fin de précipitation, un agent oxydant compatible avec ce milieu. Parmi les agents oxydants pouvant convenir, on peut citer notamment des solutions de perchlorate, de chlorate, d'hypochlorite, de persulfate de sodium, de potassium ou d'ammonium, d'eau oxygénée ou l'air, l'oxygène, l'ozone. On peut également oxyder le cérium par voie électrochimique. On utilise de préférence l'eau oxygénée.

La proportion d'agent oxydant par rapport au sel céreux à oxyder peut varier dans de larges limites. Elle est en général supérieure à la stoechiométrie et correspond, de préférence, à un excès compris entre 10 et 40 %.

On maintient ensuite le mélange réactionnel à une température comprise entre 10 et 95° C et, plus particulièrement, entre 50 et 70° C pendant une durée qui peut varier dans de larges limites et de préférence entre 5 minutes et 5 heures.

Le précipité d'hydroxyde de cérium peut être séparé du milieu réactionnel par les techniques courantes de séparation solide-liquide : filtration, décantation, centrifugation ou essorage.

Cette séparation est effectuée généralement à température ambiante.

On soumet ensuite le précipité à une opération de lavage.

Le lavage peut être opéré préférentiellement à l'eau. On utilise de préférence, de l'eau desionisée ou de l'eau distillée.

Il est également possible d'effectuer le lavage avec une solution diluée d'un acide, par exemple l'acide nitrique, dont le pH est compris entre 3,0 et 5,5.

Un tel lavage peut remplacer ou succéder à un lavage à l'eau ou inversement.

Dans le cas où l'on met en oeuvre un carboxylate de cérium dont le carboxylate correspondant au cation de la base se trouve sous forme insoluble conjointement avec l'hydroxyde de cérium, il peut s'avérer intéressant d'effectuer le lavage à l'aide d'un solvant organique solubilisant le carboxylate de cérium. On peut utiliser, par exemple, un solvant, tel que les alcools, par exemple, méthanol, éthanol, n-propanol, isopropanol et les aldéhydes ou cétones par exemple acétone.

On effectue de un à plusieurs lavages et le plus souvent de 1 à 2 lavages.

Un mode de réalisation préféré de l'opération de lavage consiste à mettre le précipité séparé en suspension dans l'eau à raison par exemple de 100 à 300 g/l.

Après un tel lavage, le précipité est séparé selon les techniques classiques précitées.

La teneur en eau libre du précipité séparé est comprise entre 20 et 80 % et généralement entre 20 et 50 %.

Le produit obtenu après séparation et lavage, peut être ensuite séché à l'air ou sous pression réduite de l'ordre de $10^{-2}$ à 100 mm de mercure (133,322 Pa et 13 332,2 Pa). La température de séchage peut varier entre la température ambiante et 100° C et la durée de séchage n'est pas critique et peut être comprise entre 2 et 48 heures et de préférence 10 à 24 heures.

Selon la dernière étape du procédé de l'invention, on calcine le produit séché à une température choisie entre 300° C et 800° C mais de préférence, entre 350° C et 600° C. Elle dure environ 30 minutes à 24 heures et de préférence 4 à 8 heures.

La borne inférieure définissant la gamme de température n'est pas critique et peut être abaissée.

Par contre, il n'y a pas intérêt à élever la limite supérieure de la température de calcination car l'on constate une chute de la surface spécifique de l'oxyde cérique obtenu.

Les oxydes cériques obtenus selon l'invention peuvent être utilisés dans de nombreuses applications. On peut citer notamment les applications en tant que charge, liant, washcoat, épaississant, dispersant, renforçateur, pigment, adsorbant et matière première pour la fabrication de céramiques.

L'oxyde cérique selon l'invention présente une grande surface spécifique si bien qu'il est bien adapté pour être utilisé dans le domaine de la catalyse, comme catalyseur ou comme support catalytique.

On donne ci-après des exemples qui illustrent l'invention sous toutefois la limiter. Dans les exemples, les pourcentages donnés sont exprimés en poids.

Exemple 1

On conduit la préparation d'hydroxyde cérique dans un réacteur d'une capacité utile de 500 cm³, muni d'une double-enveloppe dans laquelle circule de l'eau thermorégulée à la température désirée et équipé d'un dispositif d'agitation, d'un système d'introduction de réactifs.

On introduit à 20° C, 1 000 cm³ d'une solution aqueuse de soude 4,25 N.

On additionne alors en 20 minutes un mélange constitué de 175 cm³ d'une solution aqueuse de nitrate céreux à 2,85 moles/litre et de 150 g d'acide acétique concentré 17,5 N.

Le mélange est effectué à 20° C et sous agitation de 600 tours/minute.

On porte la température réactionnelle à 90° C et l'on maintient ladite température pendant 3 heures.

On laisse refroidir, à température ambiante, le mélange réactionnel constitué par une suspension aqueuse d'hydroxyde céreux.

On ajoute ensuite 38 cm³ d'eau oxygénée à 110 volumes (9,8 moles/litre), ce qui représente un excès par rapport à la stoechiométrie de 50 %.

On maintient le mélange réactionnel à 70° C pendant environ 1 heure.

On sépare le précipité d'hydroxyde cérique par filtration sur Büchner (porosité n° 3).

On effectue deux lavages à l'eau de précipité récupéré par mise en suspension dans l'eau de 100 g de précipité par litre d'eau et l'on réalise un troisième lavage également par mise en suspension du précipité dans une solution diluée d'acide nitrique à pH = 3.

Après filtration, le précipité recueilli est séché dans une étuve à 100° C durant 24 heures.

On obtient 89 g d'un produit contenant 92 % de $CeO_2$, ce qui permet de déterminer un rendement de réaction de 95 %.

On met le produit séché dans une nacelle en alumine et on le calcine ensuite dans un four à moufles durant 6 heures à 400° C.

La morphologie de l'oxyde cérique obtenue est représentée par la figure 1 (G = 220 000).

L'analyse par diffraction X permet de déterminer une taille de cristallites de 45 Å.

L'analyse porosimètre BET met en évidence :
- une surface spécifique de l'ordre de 145 m²/g,
- un volume des pores de diamètre inférieur à 1000 Å égal à 0,42 cm³/g ; la porosité apparaît être essentiellement un porosité intergranulaire,
- un volume de pores de diamètre inférieur à 200 Å égal à 0,32 cm³/g,
- une taille des pores s'échelonnant de 20 à 1 000 Å,
- un diamètre moyen de pores de 190 Å,
- un taux de sodium résiduel de 0,16 %.

Exemple 2

On reproduit l'exemple 1 sauf en ce qui concerne la température de calcination qui est de 600° C au lieu de 400° C.

On obtient un oxyde cérique ayant une surface spécifique de 95 m²/g et présentant une taille des cristallites de 55 Å.

Exemple 3

Dans un appareillage tel que décrit dans l'exemple 1, on introduit à 20° C, 1 000 cm³ d'une solution aqueuse de soude 4,36 N.

On additionne en 20 minutes et sous agitation 227 cm³ d'une solution aqueuse de nitrate cérique à 2,2 moles/litre et 150 g d'acide acétique concentré 17,5 N.

On porte la température réactionnelle à 90° C et l'on maintient ladite température pendant 3 heures.

On laisse refroidir à température ambiante le mélange réactionnel constitué par une suspension aqueuse d'hydroxyde cérique.

On sépare le précipité par filtration sur Büchner (porosité n° 3).

On effectue deux lavages à l'eau du précipité récupéré par mise en suspension dans l'eau de 100 g de précipité par litre d'eau et l'on réalise un troisième lavage à l'aide d'une solution aqueuse diluée d'acide nitrique à pH = 4,5.

Après filtration, le solide recueilli est séché 24 heures à 100° C puis calciné 6 heures à 400° C.

On obtient un oxyde cérique présentant une surface spécifique de l'ordre de 130 m²/g et un diamètre moyen des pores d'environ 180 Å et contenant 0,15 % de sodium résiduel.

## Exemple 4

On conduit la préparation de l'oxyde cérique selon le mode opératoire de l'exemple 3 mais l'on remplace les 150 g d'acide acétique concentré par 115 g d'acide formique concentré.

L'analyse BET de l'oxyde cérique obtenu met en évidence :
- une surface spécifique de l'ordre de 125 m²/g
- un taux de sodium résiduel de 0,12 %.

## Exemple 5

On reproduit l'exemple 4 à la différence près que la calcination est effectuée à 600° C au lieu de 400° C.

On obtient un oxyde cérique présentant une surface spécifique de l'ordre de 91 m²/g.

## Exemple 6

On conduit la préparation de l'oxyde cérique selon le mode opératoire de l'exemple 3 mais l'on remplace les 150 g d'acide acétique concentré par 185,2 g d'acide formique concentré.

L'analyse BET de l'oxyde cérique obtenu met en évidence :
- une surface spécifique de l'ordre de 128 m²/g,
- un volume poreux d'environ 0,39 cm³/g,
- un diamètre moyen des pores de 170 Å.
- un taux de sodium résiduel de 0,12 %.

## Exemple 7

On reproduit l'exemple 6 à la différence près que la calcination est effectuée à 600° C au lieu de 400° C.

.On obtient un oxyde cérique présentant une surface spécifique de l'ordre de 99 m²/g.

## Exemple 8

On prépare un oxyde cérique en suivant le mode opératoire de l'exemple 1 mais en partant d'un mélange constitué de 179 cm³ d'une solution aqueuse de nitrate céreux à 2,85 moles/litre et de 305,3 g d'acide benzoïque.

On obtient, après calcination à 400° C, un oxyde cérique ayant une surface spécifique de 107 m²/g.

## Exemple 9

Dans cet exemple, on précipite un hydroxyde de cérium en faisant réagir une base avec de l'acétate céreux.

L'acétate céreux est préparé au préalable par addition par petites fractions de 236 g d'acétate d'ammonium à 2,85 moles/litre dans 350 cm³ d'une solution aqueuse de nitrate céreux à 1 mole/litre : le mélange est effectué à température ambiante et sous agitation qui est maintenue pendant 20 minutes. On récupère un précipité (avec un rendement de 81 %) par filtration sur Büchner.

On sèche ensuite le précipité à l'étuve, pendant 20 heures, à 100° C.

Dans un appareillage tel que décrit dans l'exemple 1, on introduit à 20° C, 1 250 cm³ d'une solution aqueuse de soude 5 N puis l'on ajoute en 15 minutes, 397 g d'acétate céreux sous forme solide.

Le mélange est effectué à 20° C et sous agitation de 600 tours/minute.

On porte la température réactionnelle à 80° C et l'on maintient ladite température pendant 4 heures.

On laisse refroidir, à température ambiante, le mélange réactionnel constitué par une suspension aqueuse d'hydroxyde céreux.

On ajoute ensuite 95,4 cm³ d'eau oxygénée à 110 volumes (9,8 moles/litre) ce qui représente un excès par rapport à la stoechiométrie de 50 %.

On maintient le mélange réactionnel à 70° C pendant environ 1 heure.

On sépare le précipité d'hydroxyde cérique par filtration sur Büchner (porosité n° 3).

On effectue deux lavages à l'eau du précipité récupéré, par mise en suspension dans l'eau de 100 g de précipité par litre d'eau et l'on réalise un troisième lavage également par mise en suspension du précipité dans une solution diluée d'acide nitrique à pH = 5.

Après filtration, le solide recueilli est séché dans une étuve à 100° C durant 24 heures.

On met le produit séché dans une nacelle en alumine et on le calcine ensuite dans un four à moufles durant 6 heures à 400° C.

On obtient 243 g d'un produit contenant 88,6 % de CeO₂ ce qui permet de déterminer un rendement de réaction de 100 %.

L'analyse porosimétrique BET met en évidence :
- une surface spécifique de l'ordre de 148 m²/g,
- un volume des pores de diamètre inférieur à 1000 Å égal à 0,39 cm³/g,
- un volume des pores inférieur à 200 Å égal à 0,27 cm³/g,
- une taille des pores s'échelonnant de 20 à 1 000 Å ; la porosité apparaît être une porosité à la fois intergranulaire et intragranulaire,

- un diamètre moyen de pores de 80 Å.

Exemple 10

On reproduit l'exemple 9 sauf en ce qui concerne la température de calcination qui est de 600° C au lieu de 400° C.

On obtient un oxyde cérique ayant une surface spécifique de 117 m²/g.

Exemple 11

Dans l'exemple qui suit, on précipite l'hydroxyde céreux en faisant réagir une base avec du stéarate céreux.

On conduit la réaction conformément à l'exemple 9 mais en mettant en oeuvre 49,4 g de stéarate céreux et 1 000 cm³ d'une solution aqueuse de soude 0,5 N.

Après maintien du mélange réactionnel à 80° C pendant 4 heures, on laisse refroidir le mélange constitué d'hydroxyde de cérium et de stéarate de sodium.

Ledit mélange se solidifie au cours du refroidissement et on le traite ensuite par 1 000 cm³ d'éthanol.

On porte le mélange à ébullition ce qui permet de solubiliser le stéarate de sodium qui peut être alors séparé du précipité d'hydroxyde cérique par filtration sur Büchner.

Le précipité récupéré est lavé à l'eau, séché puis calciné à 400° C pendant 6 heures.

On obtient un oxyde cérique présentant une surface spécifique de l'ordre de 140 m²/g et un diamètre moyen des pores d'environ 75 Å.

Exemple 12

On reproduit l'exemple 11 à la différence près que la calcination est effectuée à 600° C au lieu de 400° C.

On obtient un oxyde cérique présentant une surface spécifique de l'ordre de 110 m²/g.

**Revendications**

1. Oxyde cérique ayant une surface spécifique d'au moins 100 m²/g,après calcination entre 350 et 450° C caractérisé par le fait qu'il présente un volume poreux d'au moins 0,30 cm³/g et des pores de diamètre moyen supérieur à 50 Å.

2. Oxyde cérique selon la revendication 1 caractérisé par le fait qu'il présente une surface spécifique de 100 à 160 m²/g après calcinanation à une température comprise entre 400 et 450° C.

3. Oxyde cérique selon l'une des revendications 1 et 2 caractérisé par le fait qu'il présente une surface spécifique de 140 à 160 m²/g, après calcination à une température comprise entre 400 et 450° C.

4. Oxyde cérique selon l'une des revendications 1 à 3 caractérisé par le fait qu'il présente une surface spécifique de 80 à 130 m²/g, après calcination à 600° C.

5. Oxyde cérique selon l'une des revendications 1 à 4 caractérisé par le fait qu'il présente une surface spécifique supérieure à 100 m²/g, après calcination à 600° C.

6. Oxyde cérique selon l'une des revendications 1 à 5 caractérisé par le fait qu'il présente une surface spécifique de 100 à 130 m²/g, après calcination à 600° C.

7. Oxyde cérique selon l'une des revendications 1 à 6 caractérisé par le fait qu'il présente un volume poreux variant entre 0,3 et 0,45 cm³/g.

8. Oxyde cérique selon l'une des revendications 1 à 7 caractérisé par le fait qu'il présente des pores de diamétre s'échelonnant entre 20 et 1000 Å.

9. Oxyde cérique selon la revendication 8 caractérisé par le fait qu'il présente un diamètre moyen de pures compris entre 50 et 200 Å.

10. Oxyde cérique selon l'une des revendications 1 à 9 caractérisé par le fait qu'il présente des cristaux de forme aciculaire.

11. Oxyde cérique selon la revendication 10 caractérisé par le fait qu'il se présente sous forme d'aiguilles de dimensions variant entre 100 et 1000 Å.

12. Oxyde cérique selon l'une des revendications 1 à 11 caractérisé par le fait qu'il présente une teneur résiduelle en cation alcalin représentant au plus 0,2 % du poids d'oxyde cérique.

13. Procédé d'obtention de l'oxyde cérique décrit dans l'une des revendications 1 à 12 caractérisé par le fait qu'il consiste à préparer un hydroxyde vrai de cérium de formule Ce (OH)₃ ou Ce (OH)₄ par réaction d'un sel de cérium et d'une base forte en présence d'ions carboxylate, ou par réaction d'un carboxylate de cérium et d'une base forte, à séparer le précipité obtenu, à le laver et à le traiter thermiquement.

**14.** Procédé selon la revendication 13 caractérisé par le fait que l'hydroxyde de cérium vrai est préparé en faisant réagir un sel de cérium et une base en présence d'ions carboxylate apportés sous forme acide ou sous forme d'un sel d'un métal alcalin ou d'ammonium.

**15.** Procédé selon la revendication 13 ou 14 caractérisé par le fait que le sel de cérium est tout sel de cérium à l'état céreux ou cérique ou leur mélange.

**16.** Procédé selon la revendication 15 caractérisé par le fait que le sel céreux est le nitrate céreux, le chlorure céreux sous forme solide ou sous forme de solution aqueuse et le sel cérique est une solution aqueuse de nitrate céri-ammoniacal ou de nitrate cérique.

**17.** Procédé selon la revendication 16 caractérisé par le fait que la solution aqueuse de sel de cérium IV est une solution provenant de l'oxydation électrochimique d'une solution de nitrate céreux ou une solution obtenue par action de l'acide nitrique sur un oxyde cérique hydraté.

**18.** Procédé selon l'une des revendications 13 à 17 caractérisé par le fait que la concentration de la solution de sel de cérium exprimée en cérium est comprise entre 0,1 et 3 moles par litre.

**19.** Procédé selon l'une des revendications 13 à 18 caractérisé par le fait que les ions carboxylates sont apportés par un acide carboxylique aliphatique, cycloaliphatique, aromatique ou leurs mélanges.

**20.** Procédé selon l'une des revendications 13 à 19 caractérisé par le fait que l'acide carboxylique est un acide carboxylique aliphatique linéaire ou ramifié ayant de 1 à 10 atomes de carbone.

**21.** Procédé selon la revendication 20 caractérisé par le fait que l'acide carboxylique est l'acide formique, l'acide acétique, l'acide propionique, l'acide benzoique.

**22.** Procédé selon l'une des revendications 13 à 21 caractérisé par le fait que le rapport molaire entre l'acide carboxylique et le sel de cérium exprimé en $CeO_2$ varie entre 1 et 10.

**23.** Procédé selon la revendication 22 caractérisé par le fait que ledit rapport est compris entre 2 et 5.

**24.** Procédé selon l'une des revendications 13 à 23 caractérisé par le fait que l'on effectue le mélange simultané, sous agitation du mélange de la solution aqueuse de sel de cérium et de l'acide carboxylique avec la solution basique ou bien additionné, en continu ou en une seule fois, la base dans ledit mélange ou inversement.

**25.** Procédé selon la revendication 13 caractérisé par le fait qu'il consiste à préparer un hydroxyde vrai de cérium par réaction d'un carboxylate de cérium III ou IV avec une base.

**26.** Procédé selon la revendication 25 caractérisé par le fait que le carboxylate de cérium est dérivé d'un acide carboxylique choisi parmi les acides carboxyliques aliphatiques, cycloaliphatiques aromatiques ou leurs mélanges.

**27.** Procédé selon la revendication 26 caractérisé par le fait que le carboxylate de cérium est dérivé d'un acide carboxylique linéaire ou ramifié ayant entre 2 et 18 atomes de carbone.

**28.** Procédé selon l'une des revendications 26 et 27 caractérisé par le fait que le carboxylate de cérium III est l'acétate, l'éthyl-2 hexanoate, le néo-décanoate, le stéarate céreux.

**29.** Procédé selon l'une des revendications 25 à 28 caractérisé par le fait que l'on ajoute le carboxylate de cérium dans la solution aqueuse de base.

**30.** Procédé selon l'une des revendications 13 à 29 caractérisé par le fait que la base est la soude ou la potasse.

**31.** Procédé selon l'une des revendications 13 à 30 caractérisé par le fait que la proportion entre la base et le sel de cérium est telle que le rapport molaire OH-/Ce exprimé en $CeO_2$ est supérieur ou égal à 3,0 et inférieur ou égal à 10.

**32.** Procédé selon la revendication 31 caractérisé par le fait que la concentration finale du milieu réactionnel en cérium exprimé en $CeO_2$ est comprise entre 0,2 et 1 mole/litre.

**33.** Procédé selon la revendication 13 caractérisé par le fait que la température réactionnelle est comprise entre la température ambiante et la température de reflux du mélange réactionnel.

**34.** Procédé selon la revendication 33 caractérisé par le fait que ladite température est comprise entre 80°C et la température de reflux du mélange réactionnel.

35. Procédé selon l'une des revendications 13 à 34 caractérisé par le fait que l'on ajoute en fin de précipitation de l'hydroxyde de cérium III, un agent oxydant compatible avec ce milieu.

36. Procédé selon la revendication 35 caractérisé par le fait que l'on met en oeuvre l'eau oxygénée.

37. Procédé selon l'une des revendications 35 et 36 caractérisé par le fait que l'on maintient le mélange réactionnel entre 10 et 95°C.

38. Procédé selon la revendication 37 caractérisé par le fait que la température du mélange réactionnel est maintenue entre 50 et 70°C.

39. Procédé selon l'une des revendications 13 à 38 caractérisé par le fait que le précipité séparé est soumis à une opération de lavage à l'eau, à l'aide d'une solution diluée d'un acide ayant un pH compris entre 3,0 et 5,5 ou à l'aide d'un solvant organique solubilisant le carboxylate correspondant au cation de la base.

40. Procédé selon la revendication 39 caractérisé par le fait que le solvant est le méthanol, l'éthanol, le n-propanol, l'isopropanol, l'acétone.

41. Procédé selon l'une des revendications 13 à 40 caractérisé par le fait que le précipité séparé est séché à l'air ou sous pression réduite à une température comprise entre la température ambiante et 100°C.

42. Procédé selon l'une des revendications 13 à 41 caractérisé par le fait que le produit séché est calciné à une température comprise entre 300 et 800°C.

43. Procédé selon la revendication 42 caractérisé par le fait que la température de calcination est choisie entre 350 et 600°C.

44. Procédé selon l'une des revendications 42 et 43 caractérisé par le fait que la durée de calcination est de 30 minutes à 24 heures.

45. Procédé selon la revendication 44 caractérisé par le fait que la durée de calcination est de 4 à 8 heures.

Claims

1. Ceric oxide having a specific area of at least 100 m²/g, after calcination at between 350 and 450°C, characterised in that it has a pore volume of at least 0.30 cm³/g and pores of a mean diameter of greater than 50 Å.

2. Ceric oxide according to claim 1 characterised in that it has a specific area of from 100 to 160 m²/g after calcination at a temperature of between 400 and 450°C.

3. Ceric oxide according to one of claims 1 and 2 characterised in that it has a specific area of from 140 to 160 m²/g after calcination at a temperature of between 400 and 450°C.

4. Ceric oxide according to one of claims 1 to 3 characterised in that it has a specific area of from 80 to 130 m²/g after calcination at 600°C.

5. Ceric oxide according to one of claims 1 to 4 characterised in that it has a specific area of greater than 100 m²/g after calcination at 600°C.

6. Ceric oxide according to one of claims 1 to 5 characterised in that it has a specific area of from 100 to 130 m²/g after calcination at 600°C.

7. Ceric oxide according to one of claims 1 to 6 characterised in that it has a pore volume which varies between 0.3 and 0.45 cm³/g.

8. Ceric oxide according to one of claims 1 to 7 characterised in that it has pores of a diameter ranging between 20 and 1000 Å.

9. Ceric oxide according to claim 8 characterised in that it has a mean pore diameter of between 50 and 200 Å.

10. Ceric oxide according to one of claims 1 to 9 characterised in that it has crystals of acicular form.

11. Ceric oxide according to claim 10 characterised in that it is in the form of needles of dimensions varying between 100 and 1000 Å.

12. Ceric oxide according to one of clams 1 to 11 characterised in that it has a residual content of aklali metal cation representing at most 0.2% of the weight of ceric oxide.

13. A process for producing the ceric oxide set forth in one of claims 1 to 12 characterised in that it comprises preparing a true hydroxide of cerium of the formula $Ce(OH)_3$ or $Ce(OH)_4$ by the reaction of a cerium salt and a strong base in the presence of carboxylate ions or by the reaction of a cerium carboxylate and a strong base, separating the precipitate obtained, washing it and subjecting it to a heat treatment.

14. A process according to claim 13 characterised in that the true cerium hydroxide is prepared by reacting a cerium salt and a base in the presence of carboxylate ions which are provided in acid form or in the form of a salt of an alkali metal or ammonium.

15. A process according to claim 13 or claim 14 characterised in that the cerium salt is any cerium salt in the cerous or ceric state or a mixture thereof.

16. A process according to claim 15 characterised in that the cerous salt is cerous nitrate or cerous chloride in solid form or in the form of an aqueous solution and the ceric salt is an aqueous solution of ceriammoniacal nitrate or ceric nitrate.

17. A process according to claim 16 characterised in that the aqueous solution of cerium (IV) salt is a solution resulting from the electrochemical oxidation of a solution of cerous nitrate or a solution obtained by the action of nitric acid on a hydrated ceric oxide.

18. A process according to one of claims 13 to 17 characterised in that the level of concentration of the solution of cerium salt expressed as cerium is between 0.1 and 3 moles per litre.

19. A process according to one of claim 13 to 18 characterised in that the carboxylate ions are provided by an aliphatic, cycloaliphatic or aromatic carboxylic acid or mixtures thereof.

20. A process according to one of claims 13 to 19 characterised in that the carboxylic acid is a straight or branched chain aliphatic carboxylic acid having from 1 to 10 carbon atoms.

21. A process according to claim 20 characterised in that the carboxylic acid is formic acid, acetic acid, propionic acid or benzoic acid.

22. A process according to one of claim 13 to 21 characterised in that the molar ratio between the carboxylic acid and the cerium salt expressed as $CeO_2$ varies between 1 and 10.

23. A process according to claim 22 characterised in that said ratio is between 2 and 5.

24. A process according to one of claims 13 to 23 characterised by effecting simultaneous mixing, with agitation, of the mixture of the aqueous solution of cerium salt and carboxylic acid with the basic solution or adding the base to said mixture or vice-versa continuously or in a single batch.

25. A process according to claim 13 characterised in that it comprises preparing a true hydroxide of cerium by reaction of a cerium (III) or (IV) carboxylate with a base.

26. A process according to claim 25 characterised in that the cerium carboxylate is derived from a carboxylic acid selected from aliphatic, cycloaliphatic or aromatic carboxylic acids or mixtures thereof.

27. A process according to claim 26 characterised in that the cerium carboxylate is derived from a straight or branched chain carboxylic acid having between 2 and 18 carbon atoms.

28. A process according to one of claims 26 and 27 characterised in that the cerium (III) carboxylate is cerous acetate, 2-ethyl hexanoate, neodecanoate or stearate.

29. A process according to one of claims 25 to 28 characterised in that the cerium carboxylate is added to the basic aqueous solution.

30. A process according to one of claims 13 to 29 characterised in that the base is sodium hydroxide or potassium hydroxide.

31. A process according to one of claims 13 to 30 characterised in that the proportion between the base and the cerium salt is such that the molar ratio OH/Ce expressed as $CeO_2$ is higher than or equal to 3.0 and lower than or equal to 10.

32. A process according to claim 31 characterised in that the final level of concentration of cerium expressed as $CeO_2$ in the reaction medium is between 0.2 and 1 mole/litre.

33. A process according to claim 13 characterised in that the reaction temperature is between ambient temperature and the reflux temperature of the reaction mixture.

34. A process according to claim 33 characterised in that said temperature is between 80° C and the reflux temperature of the reaction mixture.

35. A process according to one of claims 13 to 34 characterised by adding at the end of precipitation of the cerium (III) hydroxide an oxidising agent which is compatible with said medium.

36. A process according to claim 35 characterised by using hydrogen peroxide.

37. A process according to one of claims 35 and 36 characterised in that the reaction mixture is maintained at between 10 and 95° C.

38. A process according to claim 37 characterised in that the temperature of the reaction mixture is maintained at between 50 and 70° C.

39. A process according to one of claims 13 to 38 characterised in that the separated precipitate is subjected to a washing operation using water, by means of a dilute solution of an acid having a pH-value of between 3.0 and 5.5 or by means of an organic solvent solubilising the carboxylate corresponding to the cation of the base.

40. A process according to claim 39 characterised in that the solvent is methanol, ethanol, n-propanol, isopropanol or acetone.

41. A process according to one of claims 13 to 40 characterised in that the precipitate separated is dried in the air or at a reduced pressure at a temperature which is between ambient temperature and 100° C.

42. A process according to one of claims 13 to 41 characterised in that the dried product is calcined at a temperature of between 300 and 800° C.

43. A process according to claim 42 characterised in that the calcination temperature is selected at between 350 and 600° C.

44. A process according to one of claims 42 and 43 characterised in that the duration of the calcination operation is from 30 minutes to 24 hours.

45. A process according to claim 44 characterised in that the duration of the calcination operation is from 4 to 8 hours.

**Patentansprüche**

1. Ceroxid, das nach dem Brennen zwischen 350 und 450° C eine spezifische Oberfläche von mindestens 100 $m^2/g$ aufweist, dadurch gekennzeichnet, daß es ein Porenvolumen von mindestens 0,30 $cm^3/g$ sowie Poren mit einem mittleren Durchmesser von über 50 Å aufweist.

2. Ceroxid nach Anspruch 1, dadurch gekennzeichnet, daß es nach dem Brennen bei einer Temperatur im Bereich von 400 bis 450° C eine spezifische Oberfläche von 100 bis 160 $m^2/g$ aufweist.

3. Ceroxid nach einem der Ansprüche 1 und 2, dadurch gekennzeichnet, daß es nach dem Brennen bei einer Temperatur im Bereich von 400 bis 450° C eine spezifische Oberfläche von 140 bis 160 $m^2/g$ aufweist.

4. Ceroxid nach einem der Ansprüche 1 bis 3, dadurch gekennzeichnet, daß es nach dem Brennen bei 600° C eine spezifische Oberfläche von 80 bis 130 $m^2/g$ aufweist.

5. Ceroxid nach einem der Ansprüche 1 bis 4, dadurch gekennzeichnet, daß es nach dem Brennen bei 600° C eine spezifische Oberfäche über 100 $m^2/g$ aufweist.

6. Ceroxid nach einem der Ansprüche 1 bis 5, dadurch gekennzeichnet, daß es nach dem Brennen bei 600° C eine spezifische Oberfläche von 100 bis 130 $m^2/g$ aufweist.

7. Ceroxid nach einem der Ansprüche 1 bis 6, dadurch gekennzeichnet, daß es ein Porenvolumen im Bereich von 0,3 bis 0,45 $cm^3/g$ aufweist.

8. Ceroxid nach einem der Ansprüche 1 bis 7, dadurch gekennzeichnet, daß es Porendurchmesser im Bereich von 20 bis 1000 Å aufweist.

9. Ceroxid nach Anspruch 8, dadurch gekennzeichnet, daß es einen mittleren Porendurchmesser im Bereich von 50 bis 200 Å aufweist.

10. Ceroxid nach einem der Ansprüche 1 bis 9, dadurch gekennzeichnet, daß es nadelförmige Kristalle aufweist.

11. Ceroxid nach Anspruch 10, dadurch gekennzeichnet, daß es in Form von Nadeln mit Abmessungen im Bereich zwischen 100 und 1000 Å vorliegt.

12. Ceroxid nach einem der Ansprüche 1 bis 11, dadurch gekennzeichnet, daß es einen Restgehalt an Alkalikation von höchstens 0,2% des Gewichtes des Ceroxids aufweist.

13. Verfahren zur Herstellung des Ceroxids nach einem der Ansprüche 1 bis 12, dadurch gekennzeichnet, daß man ein echtes Cerhydroxid der Formel Ce(OH)$_3$ oder Ce(OH)$_4$ herstellt durch Umsetzen eines Cersalzes mit einer starken Base in Gegenwart von Carboxylationen oder durch Reaktion eines Cercarboxylats mit einer starken Base, daß man den erhaltenen Niederschlag abtrennt, ihn wäscht und ihn thermisch behandelt.

14. Verfahren nach Anspruch 13, dadurch gekennzeichnet, daß man das echte Cerhydroxid herstellt, indem man ein Cersalz und eine Base in Gegenwart von Carboxylationen umsetzt, die in Säureform oder in Form eines Alkalimetall- oder Ammoniumsalzes zugeführt worden sind.

15. Verfahren nach Anspruch 13 oder 14, dadurch gekennzeichnet, daß das Cersalz insgesamt Cersalz im dreiwertigen Zustand oder im vierwertigen Zustand oder ein Gemisch davon ist.

16. Verfahren nach Anspruch 15, dadurch gekennzeichnet, daß das Cer(III)-salz das Cer(III)-nitrat, das Cer(III)-chlorid in fester Form oder in Form einer wäßrigen Lösung ist und daß das Cer(IV)-salz eine wäßrige Lösung von ammoniakalischem Cer(IV)-nitrat oder von Cer(IV)-nitrat ist.

17. Verfahren nach Anspruch 16, dadurch gekennzeichnet, daß die wäßrige Lösung des Cer(IV)-salzes eine Lösung ist, die aus der elektrochemischen Oxidation einer Lösung von Cer(III)-nitrat stammt oder eine Lösung, die durch Einwirkung von Salpetersäure auf ein Cer(IV)-oxidhydrat erhalten worden ist.

18. Verfahren nach einem der Ansprüche 13 bis 17, dadurch gekennzeichnet, daß die Konzentration der Cersalzlösung, angegeben als Cer, 0,1 bis 3 mol/1 beträgt.

19. Verfahren nach einem der Ansprüche 13 bis 18, dadurch gekennzeichnet, daß die Carboxylationen durch eine aliphatische, cycloaliphatische oder aromatische Carbonsäure oder deren Gemischen zugeführt werden.

20. Verfahren nach einem der Ansprüche 13 bis 19, dadurch gekennzeichnet, daß die Carbonsäure eine lineare oder verzweigte aliphatische Carbonsäure mit 1 bis 10 Kohlenstoffatomen ist.

21. Verfahren nach Anspruch 20, dadurch gekennzeichnet, daß die Carbonsäure Ameisensäure, Essigsäure, Propionsäure oder Benzoesäure ist.

22. Verfahren nach einem der Ansprüche 13 bis 21, dadurch gekennzeichnet, daß das Molverhältnis von Carbonsäure zu Cersalz, angegeben als CeO$_2$, zwischen 1 und 10 liegt.

23. Verfahren nach Anspruch 22, dadurch gekennzeichnet, daß das Verhältnis zwischen 2 und 5 liegt.

24. Verfahren nach einem der Ansprüche 13 bis 23, dadurch gekennzeichnet, daß das man das Gemisch gleichzeitig, unter Rühren des Gemisches der wäßrigen Lösung des Cersalzes und der Carbonsäure mit der basischen Lösung herstellt oder durch Zugabe, kontinuierlich oder auf einmal, der Base in das Gemisch oder umgekehrt.

25. Verfahren nach Anspruch 13, dadurch gekennzeichnet, daß man ein echtes Cerhydroxid durch Umsetzen eines Cer(III)- oder Cer(IV)-carboxylats mit einer Base herstellt.

26. Verfahren nach Anspruch 25, dadurch gekennzeichnet, daß das Cercarboxylat sich von einer Carbonsäure ableitet, die aus den aliphatischen, cycloaliphatischen, aromatischen Carbonsäuren oder deren Gemischen ausgewählt ist.

27. Verfahren nach Anspruch 26, dadurch gekennzeichnet, daß das Cercarboxylat sich von einer linearen oder verzweigten Carbonsäure mit 2 bis 18 Kohlenstoffatomen ableitet.

28. Verfahren nach einem der Ansprüche 26 und 27, dadurch gekennzeichnet, daß das Cer(III)-carboxylat das Acetat, 2-Ethylhexanoat, Neodecanoat oder Stearat von Cer(III) ist.

29. Verfahren nach einem der Ansprüche 25 bis 28,

dadurch gekennzeichnet, daß man das Cercarboxylat zu der wäßrigen Lösung der Base gibt.

30. Verfahren nach einem der Ansprüche 13 bis 29,
dadurch gekennzeichnet, daß die Base Natriumlauge oder Kalilauge ist.

31. Verfahren nach einem der Ansprüche 13 bis 30,
dadurch gekennzeichnet, daß das Verhältnis von Base zu Cersalz so beschaffen ist, daß das Molverhältnis OH-/Ce, angegeben als $CeO_2$, größer gleich 3,0 und kleiner gleich 10 ist.

32. Verfahren nach Anspruch 31,
dadurch gekennzeichnet, daß die Endkonzentration des Reaktionsmediums an Cer, angegeben als $CeO_2$, zwischen 0,2 und 1 mol/1 beträgt.

33. Verfahren nach Anspruch 13,
dadurch gekennzeichnet, daß die Reaktionstemperatur zwischen der Raumtemperatur und der Rückflußtemperatur des Reaktionsgemisches liegt.

34. Verfahren nach Anspruch 33,
dadurch gekennzeichnet, daß die Temperatur im Bereich zwischen 80°C und der Rückflußtemperatur des Reaktionsgemisches liegt.

35. Verfahren nach einem der Ansprüche 13 bis 34,
dadurch gekennzeichnet, daß man am Ende der Ausfällung von Cer(III)-hydroxid ein mit diesem Medium verträgliches Oxidationsmittel zusetzt.

36. Verfahren nach Anspruch 35,
dadurch gekennzeichnet, daß man Wasserstoffperoxid (Lösung) zusetzt.

37. Verfahren nach einem der Ansprüche 35 und 36,
dadurch gekennzeichnet, daß man das Reaktionsgemisch bei 10 bis 95°C hält.

38. Verfahren nach Anspruch 37,
dadurch gekennzeichnet, daß man die Temperatur des Reaktionsgemisches bei 50 bis 70°C hält.

39. Verfahren nach einem der Ansprüche 13 bis 38,
dadurch gekennzeichnet, daß man den abgetrennten Niederschlag mit Wasser, mit einer verdünnten Lösung einer Säure mit einem pH-Wert im Bereich von 3,0 bis 5,5 oder mit einem organischen Lösungsmittel wäscht, das das dem Kation der Base entsprechende Carboxylat solubilisiert.

40. Verfahren nach Anspruch 39
dadurch gekennzeichnet, daß das Lösungsmittel Methanol, Ethanol, n-Propanol, Isopropanol oder Aceton ist.

41. Verfahren nach einem der Ansprüche 13 bis 40
dadurch gekennzeichnet, daß der abgetrennte Niederschlag an der Luft oder unter vermindertem Druck bei einer Temperatur im Bereich zwischen Raumtemperatur und 100°C getrocknet wird.

42. Verfahren nach einem der Ansprüche 13 bis 41,
dadurch gekennzeichnet, daß das getrocknete Produkt bei einer Temperatur im Bereich von 300 bis 800°C gebrannt wird.

43. Verfahren nach Anspruch 42,
dadurch gekennzeichnet, daß die Brenntemperatur zwischen 350 und 600°C gewählt wird.

44. Verfahren nach einem der Ansprüche 42 und 43,
dadurch gekennzeichnet, daß die Brenndauer 30 Minuten bis zu 24 Stunden beträgt.

45. Verfahren nach Anspruch 44,
dadurch gekennzeichnet, daß die Brenndauer 4 bis 8 Stunden beträgt.

455 Å